# EUROPEAN PATENT APPLICATION

(11) **EP 4 851 582 A1**
(43) Date of publication of application: **09.12.2026**
(21) Application number: 24921843.9
(22) Date of filing: 31.12.2024
(51) Int. Cl.: G01C 21/34

(54) **VEHICLE PATH PLANNING METHOD AND SYSTEM, DEVICE, VEHICLE, MEDIUM, AND PRODUCT**

(30) Priority: 31.01.2024 CN 202410143032
(71) Applicant: BYD Company Limited, Shenzhen, Guangdong 518118 (CN)
(72) Inventor: ZHANG, Luoqi, Shenzhen, Guangdong 518118 (CN); LI, Gen, Shenzhen, Guangdong 518118 (CN); LI, Zhenwei, Shenzhen, Guangdong 518118 (CN); CHEN, Xueni, Shenzhen, Guangdong 518118 (CN); ZHOU, Wenzhe, Shenzhen, Guangdong 518118 (CN)
(74) Representative: Mathys & Squire
(86) International application number: PCT/CN2024/144598
(87) International publication number: WO 2025/161821

(57) **Abstract**

A vehicle path planning method and system, a device, a vehicle, a medium, and a product are provided. In the application, an area division image of a pothole area can be obtained based on an obtained image of the pothole area in front of the vehicle. A drivable area is divided in the area division image, and the drivable area is an area in which the vehicle can safely travel in the pothole area. Then, the shortest path for passing through the pothole area is obtained based on the drivable area in the area division image for reference by a driver, thereby ensuring that the vehicle can safely and quickly pass through the pothole area on a road surface.

## Description

### CROSS-REFERENCE TO RELATED APPLICATIONS

This application claims priority to Chinese Patent Application No. 202410143032.0, filed on January 31, 2024, entitled "VEHICLE PATH PLANNING METHOD AND SYSTEM, DEVICE, VEHICLE, MEDIUM, AND PRODUCT", which is incorporated herein by reference in its entirety.

### TECHNICAL FIELD

The application relates to the field of vehicle technologies, and more specifically, to a vehicle path planning method and system, a device, a vehicle, a medium, and a product.

### BACKGROUND

Pavement potholes are potholes on a road surface formed locally due to problems such as loss of aggregates, representing severe pavement distress. Currently, a way to deal with a pavement pothole area basically depends on intuition of a vehicle driver, that is, to manually judge whether the pavement pothole area is passable. If not, the driver chooses to bypass the pavement pothole area. However, the way of relying on the driver's intuition to pass through the pavement pothole area cannot guarantee safety of the vehicle and its occupants.

In related technologies, intelligent systems are usually used to identify a pavement pothole area and send a warning to a driver after the pavement pothole area is identified, but the intelligent systems cannot guide the driver on how to safely pass through the pavement pothole area.

### TECHNICAL PROBLEM

A vehicle path planning method and system, a device, a vehicle, a medium, and a product provided in embodiments of the application can solve the technical problem of being unable to guide a driver safely through a pavement pothole area.

### SUMMARY

A series of concepts in simplified form are introduced in the summary, which will be further described in detail in the description of embodiments. The summary of the application is not intended to limit key features and essential technical features of the claimed technical solutions, nor is it intended to determine the scope of protection of the claimed technical solutions.

To address an existing problem, according to one aspect, the application provides a vehicle path planning method, including:
obtaining an image of a pothole area in front of a vehicle;
obtaining an area division image of the pothole area based on the image of the pothole area, wherein a drivable area is divided in the area division image; and
obtaining, based on the drivable area in the area division image, the shortest path for passing through the pothole area.

For example, the method further includes: controlling the vehicle to pass through the pothole area along the shortest path.

For example, after obtaining the area division image of the pothole area, and before obtaining, based on the drivable area in the area division image, the shortest path for passing through the pothole area, the method further includes:
preprocessing the area division image to obtain a preprocessed area division image, wherein the shortest path for passing through the pothole area is obtained based on the drivable area in the preprocessed area division image.

For example, an area in the area division image other than the drivable area is classified as a non-drivable area, and preprocessing the area division image to obtain the preprocessed area division image includes:
performing an image opening operation on the drivable area in the area division image to reclassify a part of the drivable area as the non-drivable area, to obtain an area division image obtained through the image opening operation, wherein the area division image obtained through the image opening operation is the preprocessed area division image.

For example, preprocessing the area division image to obtain a preprocessed area division image further includes:
comparing a lateral width of the drivable area in the area division image obtained through the image opening operation with a width of the vehicle, and reclassifying the drivable area whose lateral width is less than a preset multiple of the width of the vehicle as the non-drivable area, to obtain the preprocessed area division image, wherein the lateral width is a width in a direction perpendicular to a traveling direction of the vehicle.

For example, the preset multiple is 1.2.

For example, obtaining, based on the drivable area in the area division image, the shortest path for passing through the pothole area includes:
obtaining, based on the drivable area in the area division image by using an A-Star algorithm, the shortest path for passing through the pothole area.

For example, controlling the vehicle to pass through the pothole area along the shortest path includes:
establishing a kinematic model of the vehicle; and
controlling, based on the kinematic model, the vehicle to pass through the pothole area along the shortest path.

For example, establishing the kinematic model of the vehicle includes:
establishing the kinematic model of the vehicle based on an Ackermann steering geometry theory.

For example, the method further includes:
correcting, by using an Ackermann correction rate, the kinematic model established based on the Ackermann steering geometry theory, to obtain a corrected kinematic model, wherein the corrected kinematic model is configured to control the vehicle to pass through the pothole area along the shortest path.

For example, controlling, based on the kinematic model, the vehicle to pass through the pothole area along the shortest path includes:
controlling, based on the kinematic model by using a model predictive control algorithm, the vehicle to pass through the pothole area along the shortest path.

According to another aspect, the application provides a vehicle path planning system, including:
a sensor, configured to obtain an image of a pothole area in front of a vehicle; and
a controller, configured to: obtain an area division image of the pothole area based on the image of the pothole area, wherein a drivable area is divided in the area division image, and obtain, based on the drivable area in the area division image, the shortest path for passing through the pothole area.

For example, the controller is further configured to control the vehicle to pass through the pothole area along the shortest path.

For example, after obtaining the area division image of the pothole area, and before obtaining, based on the drivable area in the area division image, the shortest path for passing through the pothole area, the controller is further configured to:
preprocess the area division image to obtain a preprocessed area division image, wherein the shortest path for passing through the pothole area is obtained based on the drivable area in the preprocessed area division image.

For example, an area in the area division image other than the drivable area is classified as a non-drivable area, and preprocessing, by the controller, the area division image to obtain the preprocessed area division image includes:
performing, by the controller, an image opening operation on the drivable area in the area division image to reclassify a part of the drivable area as the non-drivable area, to obtain an area division image obtained through the image opening operation, wherein the area division image obtained through the image opening operation is the preprocessed area division image.

For example, preprocessing, by the controller, the area division image to obtain the preprocessed area division image further includes:
comparing, by the controller, a lateral width of the drivable area in the area division image obtained through the image opening operation with a width of the vehicle, and reclassifying the drivable area whose lateral width is less than a preset multiple of the width of the vehicle as the non-drivable area, to obtain the preprocessed area division image, wherein the lateral width is a width in a direction perpendicular to a traveling direction of the vehicle.

For example, the preset multiple is 1.2.

For example, obtaining, by the controller based on the drivable area in the area division image, the shortest path for passing through the pothole area includes:
obtaining, by the controller based on the drivable area in the area division image by using an A-Star algorithm, the shortest path for passing through the pothole area.

For example, controlling, by the controller, the vehicle to pass through the pothole area along the shortest path includes:
establishing, by the controller, a kinematic model of the vehicle; and
controlling, by the controller based on the kinematic model, the vehicle to pass through the pothole area along the shortest path.

For example, establishing, by the controller, the kinematic model of the vehicle includes: establishing, by the controller, the kinematic model of the vehicle based on an Ackermann steering geometry theory.

For example, the controller is further configured to correct, by using an Ackermann correction rate, the kinematic model established based on the Ackermann steering geometry theory, to obtain a corrected kinematic model, wherein the corrected kinematic model is configured to control the vehicle to pass through the pothole area along the shortest path.

For example, controlling, by the controller based on the kinematic model, the vehicle to pass through the pothole area along the shortest path includes:
controlling, by the controller based on the kinematic model by using a model predictive control algorithm, the vehicle to pass through the pothole area along the shortest path.

According to still another aspect, the application provides an electronic device, including a processor and a memory. The memory stores computer instructions, and when the computer instructions are executed by the processor, the processor is enabled to perform the vehicle path planning method.

According to yet another aspect, the application further provides a vehicle. The vehicle includes the foregoing vehicle path planning system, or the foregoing electronic device.

According to yet another aspect, the application further provides a computer-readable storage medium. The computer-readable storage medium stores computer instructions, and when the computer instructions are executed by a processor, the processor is enabled to perform the foregoing vehicle path planning method.

According to yet another aspect, the application further provides a computer program product, including computer instructions, and when the computer instructions are executed by a processor, the foregoing vehicle path planning method is implemented.

According to the vehicle path planning method and system, the device, the vehicle, the medium, and the product in the application, an area division image of a pothole area can be obtained based on an obtained image of the pothole area in front of the vehicle. A drivable area is divided in the area division image, and the drivable area is an area in which the vehicle can safely travel in the pothole area. Then, the shortest path for passing through the pothole area is obtained based on the drivable area in the area division image for reference by a driver, thereby ensuring that the vehicle can safely and quickly pass through the pothole area on a road surface.

### BRIEF DESCRIPTION OF DRAWINGS

The foregoing and other objects, features and advantages of the application will become more apparent from a more detailed description of embodiments of the application with reference to the accompanying drawings. The accompanying drawings are provided to further understand embodiments of the application, constitute a part of the specification, and are used together with embodiments of the application to explain the application, but do not constitute a limitation on the application. In the accompanying drawings, the same reference numerals usually represent the same components or steps.

In the accompanying drawings:
FIG. 1 is a schematic flowchart of a vehicle path planning method according to a specific embodiment of the application;
FIG. 2 is a schematic diagram of a structuring element for an image opening operation according to a specific embodiment of the application;
FIG. 3 is a schematic diagram of an Ackermann steering geometry theory according to another specific embodiment of the application;
FIG. 4 is a block diagram of a structure of a vehicle path planning system according to a specific embodiment of the application; and
FIG. 5 is a block diagram of a structure of an electronic device according to another specific embodiment of the application.

### DESCRIPTION OF EMBODIMENTS

To make the objectives, technical solutions and advantages of the application more obvious, example embodiments according to the application are described in detail below with reference to the accompanying drawings. Clearly, the described embodiments are merely some rather than all of embodiments in the application. It will be understood that the application is not limited to the example embodiments described herein. Based on embodiments of the application described in the application, all other embodiments obtained by a person skilled in the art without creative efforts shall fall within the protection scope of the application.

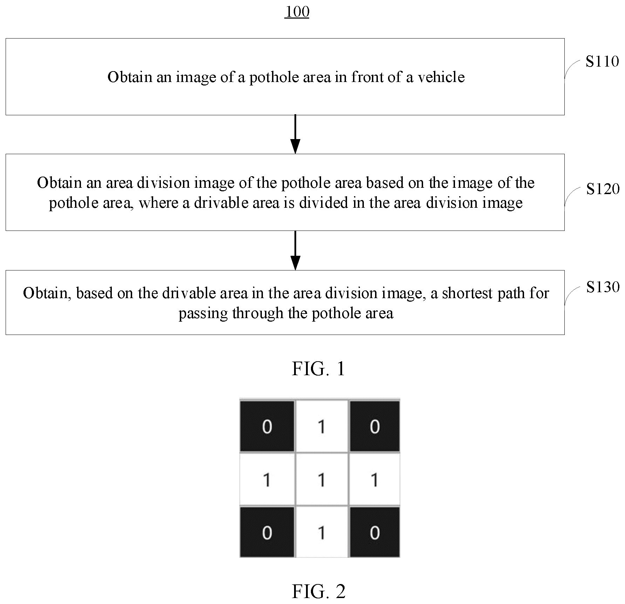

FIG. 1 is a schematic flowchart of a vehicle path planning method according to a specific embodiment of the application.

As shown in FIG. 1, the vehicle path planning method 100 may include the following steps.

In step S110: obtain an image of a pothole area in front of a vehicle.

In step S120: obtain an area division image of the pothole area based on the image of the pothole area, where a drivable area is divided in the area division image.

In step S130: obtain, based on the drivable area in the area division image, the shortest path for passing through the pothole area.

In this embodiment of the application, the image of the pothole area in front of the vehicle can be obtained, next, the area division image of the pothole area is obtained based on the obtained image of the pothole area, where the drivable area is divided in the area division image, and then, the shortest path for passing through the pothole area is obtained based on the drivable area in the area division image for reference by a driver. For example, a target detection algorithm may be used to identify a pothole area on a road surface from an image of an area in front of the vehicle. For example, after identifying the pothole area in front of the vehicle, parameters such as depth, size, location, shape, and type of a pothole in the pothole area can be obtained through a binocular measurement algorithm or a laser ranging algorithm. The parameters of the pothole in the pothole area are compared with parameters such as a tire radius and a vehicle length of the vehicle, and a drivable area of the vehicle is obtained after mathematical calculation, that is, a drivable area of the pothole area. The drivable area is displayed in the area division image of the pothole area.

Therefore, according to the vehicle path planning method in this embodiment of the application, the area division image of the pothole area can be obtained based on the obtained image of the pothole area in front of the vehicle. The drivable area is divided in the area division image, the drivable area is an area in which the vehicle can safely travel in the pothole area. Then, the shortest path for passing through the pothole area is obtained based on the drivable area in the area division image for reference by the driver, thereby ensuring that the vehicle can safely and quickly pass through the pothole area on the road surface.

In this embodiment of the application, after the shortest path for passing through the pothole area is obtained, the method of the application further includes: controlling the vehicle to pass through the pothole area along the shortest path. For example, after the shortest path for passing through the pothole area is obtained, the shortest path may be provided to the driver for reference, or a system on the vehicle may directly take over control to make the vehicle pass through the pothole area along the shortest path. Compared with the driver manually controlling the vehicle to pass through the pothole area by following the shortest path, the system controlling the vehicle can ensure that the vehicle passes through the pothole area more safely and efficiently.

In this embodiment of the application, after the area division image of the pothole area is obtained and before the shortest path for passing through the pothole area is obtained based on the drivable area in the area division image, the method of the application further includes: preprocessing the area division image to obtain a preprocessed area division image. The shortest path for passing through the pothole area is obtained based on the drivable area in the preprocessed area division image. For example, the main purpose of preprocessing the area division image is to further process the drivable area in the area division image, to reduce processing difficulty and time of a subsequent step, making the method of the application more efficient.

Specifically, an area in the area division image other than the drivable area is classified as a non-drivable area. The non-drivable area indicates that the vehicle cannot drive in the area. Preprocessing the area division image to obtain the preprocessed area division image includes: performing an image opening operation on the drivable area in the area division image to reclassify a part of the drivable area as the non-drivable area, to obtain an area division image obtained through the image opening operation, where the area division image obtained through the image opening operation is the preprocessed area division image. For example, drivable areas in the obtained area division image are generally in a range-connected state. However, there are some small drivable areas that are not connected to other drivable areas, or in other words, there are some small drivable areas that are isolated from a large range of drivable area. These small drivable areas can easily interfere with a subsequent processing step. Therefore, it is necessary to perform an opening operation on the drivable areas in the area division image, to avoid these small drivable areas, thereby better serving the subsequent processing step.

Specifically, performing the opening operation on the drivable area in the area division image includes: first performing an erosion operation on the drivable area, and then performing a dilation operation on the drivable area obtained through the erosion operation. Both the erosion operation and dilation operation require the use of a structuring element. For example, the area division image is a binary image, a pixel value of the drivable area is 1, and a pixel value of the non-drivable area is 0. In this case, the structuring element shown in FIG. 2 may be used to perform the erosion operation and dilation operation on the drivable area in the area division image. An origin of the structuring element shown in FIG. 2 is a center point. For example, the area division image may alternatively be a grayscale image or a color image. This is not limited in the application. When the area division image is the grayscale image or the color image, a way of performing the opening operation on the drivable area in the area division image is similar to that used when the area division image is the binary image. For example, any other suitable structuring element may also be used to perform the erosion operation and dilation operation on the drivable area in the area division image. This is not limited in the application. For example, after the opening operation is performed on the drivable area in the image area division image, a closing operation may be further performed on the drivable area in the image area division image. Specifically, this includes: first performing the dilation operation on the drivable area in the image area division image obtained through the opening operation, and then performing the erosion operation.

In this embodiment of the application, preprocessing the area division image to obtain the preprocessed area division image further includes: comparing a lateral width of the drivable area in the area division image obtained through the image opening operation with a width of the vehicle, and reclassifying a drivable area whose lateral width is less than a preset multiple of the width of the vehicle as the non-drivable area, to obtain the preprocessed area division image. The lateral width is a width in a direction perpendicular to a traveling direction of the vehicle. Specifically, the traveling direction of the vehicle refers to a traveling direction in which the vehicle encounters a pothole area. It is assumed that the traveling direction of the vehicle is a y-axis direction when encountering the pothole area, the lateral width of the drivable area refers to a width of the drivable area along an x-axis direction, where an x-axis and a y-axis are perpendicular to each other. In conclusion, preprocessing the area division image may include only performing the opening operation on the drivable area in the area division image. Alternatively, preprocessing the area division image may include performing the opening operation on the drivable area in the area division image to obtain the area division image obtained through the opening operation. Then the lateral width of the drivable area in the area division image obtained through the image opening operation is compared with the width of the vehicle, and the drivable area whose lateral width is less than the preset multiple of the width of the vehicle is reclassified as the non-drivable area.

In this embodiment of the application, the preset multiple of the width of the vehicle is 1.2. In other words, a drivable area with a lateral width less than 1.2 times the width of the vehicle is reclassified as the non-drivable area, and a lateral width of a remaining drivable area is greater than or equal to 1.2 times the width of the vehicle. For example, the preset multiple of the width of the vehicle should be greater than or equal to 1, that is, the width of the drivable area should be greater than or equal to at least the width of the vehicle. For example, to prevent an accident, and taking into account a safety margin, the preset multiple of the width of the vehicle should be greater than 1.

In this embodiment of the application, obtaining the shortest path for passing through the pothole area based on the drivable area in the area division image includes: obtaining, based on the drivable area in the area division image by using an A-Star algorithm, the shortest path for passing through the pothole area. For example, when the A-Star algorithm is used to obtain the shortest path, the area division image needs to be divided into grid-like nodes by rows and columns. Each node may be a square, triangle, polygon, or another shape. A node in the drivable area is defined as an available node, and a node in the non-drivable area is defined as an unavailable node. That is, the non-drivable area is equivalent to an obstacle. For example, when the A-Star algorithm is used to obtain the shortest path, a heuristic function also needs to be predefined, as shown in the following equation: $f \left(n\right) = g \left(n\right) + h \left(n\right)$

*f*(*n*) is an estimated cost from a start point to a target point via node *n*, *g*(*n*) is an actual cost from a singularity to the node *n*, and *h*(*n*) is an estimated cost of the shortest path from the node *n* to the target point. The cost is usually calculated using a distance (Manhattan distance, Euclidean distance, or the like). The start point is a position at which the vehicle enters the pothole area, and the target point is a position at which the vehicle leaves the pothole area. In this case, the start point and the target point must be located in the drivable area.

The following describes in detail logical steps of using the A-Star algorithm to obtain the shortest path for passing through the pothole area based on the drivable area in the area division image.

First, the start point is added into an open list (Open List).

Next, the following step is repeated:
the open list is traversed, *f*(*n*) for each node in the open list is calculated, and a node with smallest *f*(*n*) is selected from the open list as a current node.

When a heuristic search is performed, specifically, by expanding all neighboring nodes of the current node, the following situations may be encountered. Situation A: if the neighboring node is an unavailable node, the neighboring node is ignored; or if the neighboring node is an available node and is not in the open list, the neighboring node is added into the open list, and a parent node of the neighboring node is set as the current node, and *g*(*n*) and *h*(*n*) of the neighboring node are calculated. Situation B: if the neighboring node is already in the open list or a close list (Close List), it is checked whether this path (a path from the current node to the neighboring node) is better, with *g*(*n*) as a reference index. If reaching the neighboring node via this path results in smaller *g*(*n*) for the neighboring node, it indicates that the path is better. As a result, a parent node of the neighboring node is reset as the current node, and *g*(*n*) and *h*(*n*) of the neighboring node are recalculated.

The current node is moved to the close list.

When one of the following conditions is met, a loop of the foregoing steps is broken and the A-Star algorithm ends: (1) The target point is added into the open list, and in this case, backtracking from the target point to the start point yields the shortest path from the start point to the target point. (2) If the target point cannot be found and the open list is empty, it indicates that there is no available path from the start point to the target point.

For example, when the A-Star algorithm is used to obtain the shortest path, a state transition priority may be predefined. For example, if the target point is located to the left-front of the start point, the state transition priority may be defined as: F (front) > L (left) > R (right) > B (rear). The state transition priority is used to select an order of nodes when there are a plurality of nodes with smallest *f*(*n*) in the open list. For example, if there are two nodes with the smallest *f*(*n*) in the open list, one node is in front of the current node and the other node is behind the current node, the node in front of the current node is preferentially selected. For example, the state transition priority may not be predefined. In this case, when there are a plurality of nodes with smallest *f*(*n*) in the open list, in order to speed up the calculation, a node with the smallest *f*(*n*) that is last added into the open list is preferentially selected.

In this embodiment of the application, controlling the vehicle to pass through the pothole area along the shortest path includes: establishing a kinematic model of the vehicle; and controlling, based on the kinematic model, the vehicle to pass through the pothole area along the shortest path. For example, after the kinematic model of the vehicle is established, if the kinematic model is to be used for subsequent control, the kinematic model of the vehicle needs to be linearized and then discretized.

Specifically, establishing the kinematic model of the vehicle includes: establishing the kinematic model of the vehicle based on an Ackermann steering geometry theory. As shown in the following equation, a linear discrete model is obtained by linearizing and discretizing the kinematic model of the vehicle based on the Ackermann steering geometry theory: $ΔX \left(k+1\right) = A * ΔX \left(k\right) + B * ΔU \left(k\right)$

X is a state vector, U is an input control vector, A is a state matrix, and B is a control matrix. Details are as follows. $A = \left[\begin{matrix}1 & 0 & - νT sin φ \\ 0 & 1 & νT cos φ \\ 0 & 0 & 1\end{matrix}\right] , B = \left[\begin{matrix}T cos φ & 0 \\ T sin φ & 0 \\ \frac{T tan δ}{L} & \frac{νT}{{Lcos}^{2} δ}\end{matrix}\right] , X = \left[\begin{matrix}x \\ y \\ φ\end{matrix}\right] , U = \left[\begin{matrix}ν \\ δ\end{matrix}\right]$

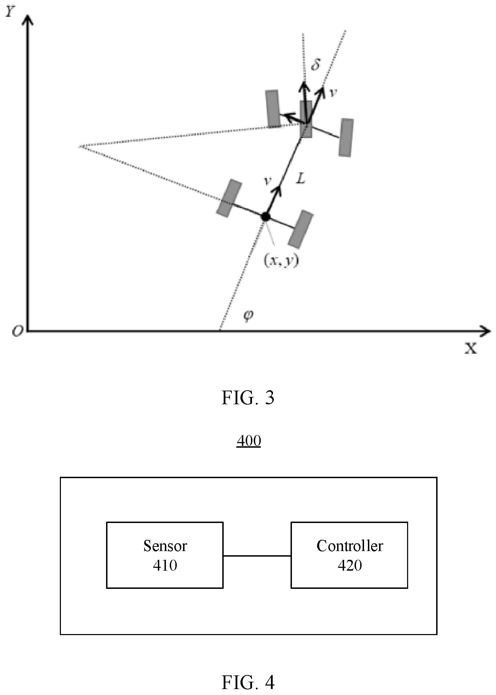

As shown in FIG. 3, v represents a vehicle speed (a rear axle), L represents a wheel base, *φ* represents a vehicle heading angle, *δ* represents a front wheel steering angle, and (*x, y*) represents coordinates of a rear axle center.

For example, the foregoing is a linear discrete model obtained by linearizing and discretizing the kinematic model of the vehicle based on the Ackermann steering geometry theory in an ideal case. In practice, due to tire side-slip angle and tire wear rate, an Ackermann correction rate needs to be introduced to correct the kinematic model of the vehicle established based on the Ackermann steering geometry theory, to obtain a corrected kinematic model. The corrected kinematic model is configured to control the vehicle to pass through the pothole area along the shortest path. For example, the Ackermann correction rate *R*_{A} is shown as the following equation: ${R}_{A} = \frac{{θ}_{ia} - {θ}_{o}}{{θ}_{i} - {θ}_{o}}$

*θ*ₒ is an outer front wheel angle, *θ*ᵢ is a theoretical inner front wheel steering angle calculated based on *θ*ₒ by using the Ackermann steering geometry theory, and *θ*ᵢₐ is an actual inner front wheel steering angle of the vehicle when the outer front wheel steering angle is*θ*ₒ.

The linear discrete model obtained by linearizing and discretizing the corrected motion model is shown as the following equation: $ΔX \left(k+1\right) = A * {R}_{A} * ΔX \left(k\right) + B * {R}_{A} * ΔU \left(k\right)$

In this embodiment of the application, controlling the vehicle to pass through the pothole area along the shortest path based on the kinematic model includes: controlling, based on the kinematic model by using a model predictive control (MPC) algorithm, the vehicle to pass through the pothole area along the shortest path. The MPC algorithm is shown as the following equation: $\begin{matrix}min J = {\sum }_{k = 1}^{N - 1} x \left(k\right) ′ Qx \left(k\right) + {x}_{N} ′ {Px}_{N} + u \left(k\right) ′ Ru \left(k\right) \\ s . t . {u}_{min} ⩽ {u}_{k} ⩽ {u}_{max} , {y}_{min} ⩽ {y}_{k} ⩽ {y}_{max}\end{matrix}$

*J* is a cost function, P is a terminal state weight matrix, Q is a process state weight matrix, R is an input weight matrix, x(k) is a process state vector, *u*(*k*) is a control input vector, and *x_{N}* is a terminal state vector. The inequalities are equality and inequality constraints that the input *uₖ* and output *yₖ* should satisfy.

In this embodiment of the application, although the model predictive control algorithm is independent of a specific model, a vehicle model is needed during actual implementation. However, when the shortest path is obtained by using the A-Star algorithm, a dynamic model of the vehicle is not considered. Therefore, the model predictive control algorithm can consider the dynamic model of the vehicle based on the shortest path obtained by using the A-Star algorithm. In addition, the model predictive algorithm also considers control over a step size in the future, thereby continuously optimizing an actual traveling trajectory planning of the vehicle based on the shortest path.

The foregoing describes an example of the vehicle path planning method according to a specific embodiment of the application. Based on the foregoing description, according to the vehicle path planning method in the specific embodiment of the application, the area division image of the pothole area can be obtained based on the obtained image of the pothole area in front of the vehicle. The drivable area is divided in the area division image, the drivable area is an area in which the vehicle can safely travel in the pothole area. Then, the shortest path for passing through the pothole area is obtained based on the drivable area in the area division image for reference by the driver, thereby ensuring that the vehicle can safely and quickly pass through the pothole area on the road surface. For example, after the shortest path is obtained, the system on the vehicle may take over control to make the vehicle pass through the pothole area along the shortest path. Compared with the driver manually controlling the vehicle to pass through the pothole area by following the shortest path, the system controlling the vehicle can ensure that the vehicle passes through the pothole area more safely and efficiently.

With reference to FIG. 4, the following describes a vehicle path planning system according to a specific embodiment of the application. FIG. 4 is a block diagram of a structure of a vehicle path planning system according to a specific embodiment of the application.

As shown in FIG. 4, the vehicle path planning system 400 in the application includes a sensor 410 and a controller 420. The sensor 410 is configured to obtain an image of a pothole area in front of a vehicle. The controller 420 is configured to: obtain an area division image of the pothole area based on the image of the pothole area, where a drivable area is divided in the area division image, and obtain, based on the drivable area in the area division image, the shortest path for passing through the pothole area.

In this embodiment of the application, the sensor 410 can obtain the image of the pothole area in front of the vehicle. Next, the controller 420 obtains the area division image of the pothole area based on the obtained image of the pothole area, where the drivable area is divided in the area division image, and then, the controller 420 obtains the shortest path for passing through the pothole area based on the drivable area in the area division image for reference by a driver. For example, the controller 420 may use a target detection algorithm to identify a pothole area on a road surface from an image of an area in front of the vehicle. For example, after identifying the pothole area in front of the vehicle, the controller 420 can obtain parameters such as depth, size, location, shape, and type of a pothole in the pothole area through a binocular measurement algorithm or a laser ranging algorithm. The parameters of the pothole in the pothole area are compared with parameters such as a tire radius and a vehicle length of the vehicle, and a drivable area of the vehicle is obtained after mathematical calculation, that is, a drivable area of the pothole area. The drivable area is displayed in the area division image of the pothole area. For example, the sensor 410 includes a binocular camera, a depth camera, and a lidar. For example, the controller 420 includes a microcontroller unit.

Therefore, according to the vehicle path planning system in this embodiment of the application, the controller can obtain the area division image of the pothole area based on the obtained image of the pothole area in front of the vehicle. The drivable area is divided in the area division image, the drivable area is an area in which the vehicle can safely travel in the pothole area. Then, the controller obtains the shortest path for passing through the pothole area based on the drivable area in the area division image for reference by the driver, thereby ensuring that the vehicle can safely and quickly pass through the pothole area on the road surface.

In this embodiment of the application, after obtaining the shortest path for passing through the pothole area, the controller 420 is further configured to: control the vehicle to pass through the pothole area along the shortest path. For example, after the shortest path for passing through the pothole area is obtained, the shortest path may be provided to the driver for reference, or the controller 420 on the vehicle path planning system may directly take over control to make the vehicle pass through the pothole area along the shortest path. Compared with the driver manually controlling the vehicle to pass through the pothole area by following the shortest path, the controller 420 controlling the vehicle can ensure that the vehicle passes through the pothole area more safely and efficiently.

In this embodiment of the application, after obtaining the area division image of the pothole area and before obtaining the shortest path for passing through the pothole area based on the drivable area in the area division image, the controller 420 is further configured to: preprocess the area division image to obtain a preprocessed area division image. The shortest path for passing through the pothole area is obtained based on the drivable area in the preprocessed area division image. For example, a main purpose of preprocessing the area division image is to further process the drivable area in the area division image, to reduce processing difficulty and time of a subsequent step, making the system of the application more efficient.

In this embodiment of the application, an area in the area division image other than the drivable area is classified as a non-drivable area. The controller 420 preprocessing the area division image to obtain the preprocessed area division image includes the controller 420 performing an image opening operation on the drivable area in the area division image to reclassify a part of the drivable area as the non-drivable area, to obtain an area division image obtained through the image opening operation, where the area division image obtained through the image opening operation is the preprocessed area division image. For example, drivable areas in the obtained area division image are generally in a range-connected state. However, there are some small drivable areas that are not connected to other drivable areas, or in other words, there are some small drivable areas that are isolated from a large range of drivable areas. These small drivable areas can easily interfere with a subsequent processing step. Therefore, it is necessary to perform an opening operation on the drivable areas in the area division image, to avoid these small drivable areas, thereby better serving the subsequent processing step.

Specifically, the controller 420 performing the opening operation on the drivable area in the area division image includes: first performing an erosion operation on the drivable area, and then performing a dilation operation on the drivable area obtained through the erosion operation. Both the erosion operation and dilation operation require the use of a structuring element. For example, the area division image is a binary image, a pixel value of the drivable area is 1, and a pixel value of the non-drivable area is 0. In this case, the structuring element shown in FIG. 2 may be used to perform the erosion operation and dilation operation on the drivable area in the area division image. An origin of the structuring element shown in FIG. 2 is a center point. For example, the area division image may alternatively be a grayscale image or a color image. This is not limited in the application. When the area division image is the grayscale image or the color image, a way of performing the opening operation on the drivable area in the area division image is similar to that used when the area division image is the binary image. For example, any other suitable structuring element may also be used to perform the erosion operation and dilation operation on the drivable area in the area division image. This is not limited in the application. For example, after the opening operation is performed on the drivable area in the image area division image, a closing operation may be further performed on the drivable area in the image area division image. Specifically, this includes: first performing the dilation operation on the drivable area in the image area division image obtained through the opening operation, and then performing the erosion operation.

In this embodiment of the application, the controller 420 preprocessing the area division image to obtain the preprocessed area division image further includes: comparing a lateral width of the drivable area in the area division image obtained through the image opening operation with a width of the vehicle, and reclassifying a drivable area whose lateral width is less than a preset multiple of the width of the vehicle as the non-drivable area, to obtain the preprocessed area division image. The lateral width is a width in a direction perpendicular to a traveling direction of the vehicle. Specifically, the traveling direction of the vehicle refers to a traveling direction in which the vehicle encounters a pothole area. It is assumed that the traveling direction of the vehicle is a y-axis direction when encountering the pothole area, the lateral width of the drivable area refers to a width of the drivable area along an x-axis direction, where an x-axis and a y-axis are perpendicular to each other. In conclusion, the controller 420 preprocessing the area division image may include only performing the opening operation on the drivable area in the area division image. Alternatively, the controller 420 preprocessing the area division image may include performing the opening operation on the drivable area in the area division image to obtain the area division image obtained through the opening operation. Then the lateral width of the drivable area in the area division image obtained through the image opening operation is compared with the width of the vehicle, and the drivable area whose lateral width is less than the preset multiple of the width of the vehicle is reclassified as the non-drivable area.

In this embodiment of the application, the preset multiple of the width of the vehicle is 1.2. In other words, a drivable area with a lateral width less than 1.2 times the width of the vehicle is reclassified as the non-drivable area, and a lateral width of a remaining drivable area is greater than or equal to 1.2 times the width of the vehicle. For example, the preset multiple of the width of the vehicle should be greater than or equal to 1, that is, the width of the drivable area should be greater than or equal to at least the width of the vehicle. For example, to prevent an accident, and taking into account a safety margin, the preset multiple of the width of the vehicle should be greater than 1.

In this embodiment of the application, the controller 420 obtaining the shortest path for passing through the pothole area based on the drivable area in the area division image includes: the controller 420 obtaining, based on the drivable area in the area division image by using an A-Star algorithm, the shortest path for passing through the pothole area.

For example, when the controller 420 uses the A-Star algorithm to obtain the shortest path, the area division image needs to be divided into grid-like nodes by rows and columns. Each node may be a square, triangle, polygon, or another shape. A node in the drivable area is defined as an available node, and a node in the non-drivable area is defined as an unavailable node. That is, the non-drivable area is equivalent to an obstacle. For example, when the controller 420 uses the A-Star algorithm to obtain the shortest path, a heuristic function also needs to be predefined, as shown in the following equation: $f \left(n\right) = g \left(n\right) + h \left(n\right)$

*f*(*n*) is an estimated cost from a start point to a target point via node *n*, *g*(*n*) is an actual cost from a singularity to the node *n*, and *h*(*n*) is an estimated cost of the shortest path from the node *n* to the target point. The cost is usually calculated using a distance (Manhattan distance, Euclidean distance, or the like). The start point is a position at which the vehicle enters the pothole area, and the target point is a position at which the vehicle leaves the pothole area. In this case, the start point and the target point must be located in the drivable area.

The following describes in detail logical steps of using the A-Star algorithm by the controller 420 to obtain the shortest path for passing through the pothole area based on the drivable area in the area division image.

First, the start point is added into an open list (Open List).

Next, the following step is repeated:
the open list is traversed, *f*(*n*) for each node in the open list is calculated, and a node with smallest *f*(*n*) is selected from the open list as a current node.

When a heuristic search is performed, specifically, by expanding all neighboring nodes of the current node, the following situations may be encountered. Situation A: if the neighboring node is an unavailable node, the neighboring node is ignored; or if the neighboring node is an available node and is not in the open list, the neighboring node is added into the open list, and a parent node of the neighboring node is set as the current node, and *g*(*n*) and *h*(*n*) of the neighboring node are calculated. Situation B: if the neighboring node is already in the open list or a close list (Close List), it is checked whether this path (a path from the current node to the neighboring node) is better, with *g*(*n*) as a reference index. If reaching the neighboring node via this path results in smaller *g*(*n*) for the neighboring node, it indicates that the path is better. As a result, a parent node of the neighboring node is reset as the current node, and *g*(*n*) and *h*(*n*) of the neighboring node are recalculated.

The current node is moved to the close list.

When one of the following conditions is met, a loop of the foregoing steps is broken and the A-Star algorithm ends: (1) The target point is added into the open list, and in this case, backtracking from the target point to the start point yields the shortest path from the start point to the target point. (2) If the target point cannot be found and the open list is empty, it indicates that there is no available path from the start point to the target point.

For example, when the controller 420 uses the A-Star algorithm to obtain the shortest path, a state transition priority may be predefined. For example, if the target point is located to the left-front of the start point, the state transition priority may be defined as: F (front) > L (left) > R (right) > B (rear). The state transition priority is used to select an order of nodes when there are a plurality of nodes with smallest *f*(*n*) in the open list. For example, if there are two nodes with the smallest *f*(*n*) in the open list, one node is in front of the current node and the other node is behind the current node, the node in front of the current node is preferentially selected. For example, the controller 420 may not predefine the state transition priority. In this case, when there are a plurality of nodes with smallest *f*(*n*) in the open list, in order to speed up the calculation, a node with the smallest *f*(*n*) that is last added into the open list is preferentially selected.

In this embodiment of the application, the controller 420 controlling the vehicle to pass through the pothole area along the shortest path includes: the controller 420 establishing a kinematic model of the vehicle; and the controller 420 controlling, based on the kinematic model, the vehicle to pass through the pothole area along the shortest path. For example, after the kinematic model of the vehicle is established, if the kinematic model is to be used for subsequent control, the kinematic model of the vehicle needs to be linearized and then discretized.

Specifically, the controller 420 establishing the kinematic model of the vehicle includes: the controller 420 establishing the kinematic model of the vehicle based on an Ackermann steering geometry theory. As shown in the following equation, a linear discrete model is obtained by linearizing and discretizing the kinematic model of the vehicle based on the Ackermann steering geometry theory: $ΔX \left(k+1\right) = A * ΔX \left(k\right) + B * ΔU \left(k\right)$

X is a state vector, U is an input control vector, A is a state matrix, and B is a control matrix. Details are as follows. $A = \left[\begin{matrix}1 & 0 & - νT sin φ \\ 0 & 1 & νT cos φ \\ 0 & 0 & 1\end{matrix}\right] , B = \left[\begin{matrix}T cos φ & 0 \\ T sin φ & 0 \\ \frac{T tan δ}{L} & \frac{νT}{{Lcos}^{2} δ}\end{matrix}\right] , X = \left[\begin{matrix}x \\ y \\ φ\end{matrix}\right] , U = \left[\begin{matrix}ν \\ δ\end{matrix}\right]$

As shown in FIG. 3, v represents a vehicle speed (a rear axle), L represents a wheel base, *φ* represents a vehicle heading angle, *δ* represents a front wheel steering angle, and (*x, y*) represents coordinates of a rear axle center.

For example, the foregoing is a linear discrete model obtained by linearizing and discretizing the kinematic model of the vehicle based on the Ackermann steering geometry theory in an ideal case. In practice, due to tire side-slip angle and tire wear rate, an Ackermann correction rate needs to be introduced. In other words, the controller 420 is further configured to correct, by using the Ackermann correction rate, the kinematic model of the vehicle established based on the Ackermann steering geometry theory, to obtain a corrected kinematic model. The corrected kinematic model is configured to control the vehicle to pass through the pothole area along the shortest path. For example, the Ackermann correction rate *R*_{A} is shown as the following equation: ${R}_{A} = \frac{{θ}_{ia} - {θ}_{o}}{{θ}_{i} - {θ}_{o}}$

*θ*ₒ is an outer front wheel angle, *θ*ᵢ is a theoretical inner front wheel steering angle calculated based on *θ*ₒ by using the Ackermann steering geometry theory, and *θ*ᵢₐ is an actual inner front wheel steering angle of the vehicle when the outer front wheel steering angle is*θ*ₒ.

The linear discrete model obtained by linearizing and discretizing the corrected motion model is shown as the following equation: $ΔX \left(k+1\right) = A * {R}_{A} * ΔX \left(k\right) + B * {R}_{A} * ΔU \left(k\right)$

In this embodiment of the application, the controller 420 controlling the vehicle to pass through the pothole area along the shortest path based on the kinematic model includes: the controller 420 controlling, based on the kinematic model by using a model predictive control (MPC) algorithm, the vehicle to pass through the pothole area along the shortest path. The MPC algorithm is shown as the following equation: $\begin{matrix}min J = {\sum }_{k = 1}^{N - 1} x \left(k\right) ′ Qx \left(k\right) + {x}_{N} ′ {Px}_{N} + u \left(k\right) ′ Ru \left(k\right) \\ s . t . {u}_{min} ⩽ {u}_{k} ⩽ {u}_{max} , {y}_{min} ⩽ {y}_{k} ⩽ {y}_{max}\end{matrix}$

*J* is a cost function, P is a terminal state weight matrix, Q is a process state weight matrix, R is an input weight matrix, x(k) is a process state vector, *u*(*k*) is a control input vector, and *x_{N}* is a terminal state vector. The inequalities are equality and inequality constraints that the input *uₖ* and output *yₖ* should satisfy.

In this embodiment of the application, although the model predictive control algorithm is independent of a specific model, a vehicle model is needed during actual implementation. However, when the shortest path is obtained by using the A-Star algorithm, a dynamic model of the vehicle is not considered. Therefore, the model predictive control algorithm can consider the dynamic model of the vehicle based on the shortest path obtained by using the A-Star algorithm. In addition, the model predictive algorithm also considers control over a step size in the future, thereby continuously optimizing an actual traveling trajectory planning of the vehicle based on the shortest path.

The foregoing describes an example of the vehicle path planning system according to a specific embodiment of the application. For example, the vehicle path planning system may also include other composition structures, and this is not limited in this embodiment of the application.

Based on the foregoing description, according to the vehicle path planning system in the specific embodiment of the application, the area division image of the pothole area can be obtained based on the obtained image of the pothole area in front of the vehicle. The drivable area is divided in the area division image, the drivable area is an area in which the vehicle can safely travel in the pothole area. Then, the shortest path for passing through the pothole area is obtained based on the drivable area in the area division image for reference by the driver, thereby ensuring that the vehicle can safely and quickly pass through the pothole area on the road surface. For example, after the shortest path is obtained, the controller on the vehicle path planning system may take over control to make the vehicle pass through the pothole area along the shortest path. Compared with the driver manually controlling the vehicle to pass through the pothole area by following the shortest path, the controller controlling the vehicle can ensure that the vehicle passes through the pothole area more safely and efficiently.

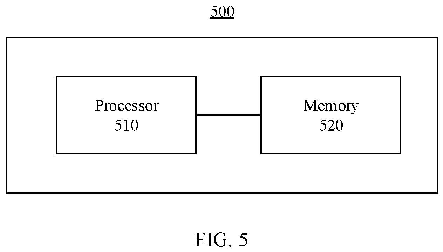

With reference to FIG. 5, the following describes an electronic device according to a specific embodiment of the application. FIG. 5 is a block diagram of a structure of an electronic device according to a specific embodiment of the application. As shown in FIG. 5, the electronic device 500 includes a processor 510 and a memory 520. The memory 520 stores computer instructions. When the computer instructions are executed by the processor 510, the processor 510 performs the foregoing vehicle path planning method.

An embodiment of the application further provides a vehicle. The vehicle includes the foregoing vehicle path planning system, or the vehicle includes the foregoing electronic device. For example, the vehicle may also include other composition structures, and this is not limited in this embodiment of the application.

An embodiment of the application further provides a computer-readable storage medium. The computer-readable storage medium stores computer instructions, and when the computer instructions are executed by a processor, the processor is enabled to perform the foregoing vehicle path planning method.

An embodiment of the application further provides a computer program product, including computer instructions, and when the computer instructions are executed by a processor, the foregoing vehicle path planning method is implemented.

Although example embodiments have been described herein with reference to the accompanying drawings, it will be understood that the foregoing example embodiments are merely examples and are not intended to limit the scope of the application thereto. A person of ordinary skill in the art can make various modifications and variations to the application without departing from the spirit and the scope of the application. All these modifications and variations are intended to be included within the scope of the application defined by the appended claims.

A person of ordinary skill in the art will understand that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application. However, it should not be considered that the implementation goes beyond the scope of the application.

In the several embodiments provided in the application, it will be understood that the disclosed device and method may be implemented in other manners. For example, the described device embodiment is merely an example. For example, unit division is merely logical function division and may be other division in actual implementation. For example, a plurality of units or components may be combined or integrated into another device, or some features may be omitted or not performed.

Many specific details are set forth in the specification. However, it will be understood that embodiments of the application may be practiced without these specific details. In some instances, well-known methods, structures and techniques have not been shown in detail, in order not to obscure understanding of this specification.

Similarly, it will be understood that in order to simplify the application and aid in understanding one or more of the various aspects of the present invention, in the description of example embodiments of the application, various features of the application are sometimes grouped together into a single embodiment, figure, or description thereof. However, the method of the application shall not be interpreted as reflecting the following intention that the claimed application requires more features than are specifically described in each claim of the application. More precisely, as reflected in the corresponding claims, the invention opinion lies in that the corresponding technical problems may be solved with fewer than all features of a single disclosed embodiment. Thus, the claims following the specific implementations are hereby expressly incorporated into these specific implementations, and each claim stands as an independent embodiment of the application.

A person skilled in the art will understand that, except where features are mutually exclusive, all features disclosed in this specification (including the attendant claims, abstract and drawings) and all processes or units of any method or device disclosed in this manner may be combined in any combination. Each feature disclosed in this specification (including the attendant claims, abstract and drawings) may be replaced by an alternative feature serving the same, equivalent or similar purpose, unless specifically noted otherwise.

Furthermore, a person skilled in the art will understand that although some embodiments described herein include some features included in other embodiments but exclude other features, combination of features from different embodiments is intended to fall within the scope of the application and to form different embodiments. For example, in the claims, any of the claimed embodiments may be used in any combination.

The various component embodiments of the application may be implemented in hardware, or in software modules running on one or more processors, or in a combination thereof. A person skilled in the art will understand that a microprocessor or a digital signal processor (DSP) may be used in practice to implement some or all functions of some modules in the object analysis device according to embodiment of the application. The application may also be implemented as apparatus programs (for example, computer instructions and a computer program product) for executing a part or all of the methods described herein. Such programs for implementing the application may be stored on a computer-readable medium, or may have the form of one or more signals. Such a signal may be downloaded from an Internet website, or provided on a carrier signal, or in any other form.

It should be noted that the foregoing embodiments illustrate rather than limit the application and that a person skilled in the art may design alternative embodiments without departing from the scope of the appended claims. In the claims, any reference sign placed between parentheses shall not be construed as limitation on the claims. The word "comprising" does not exclude the presence of elements or steps not listed in the claims. The word "a" or "an" preceding the element does not exclude the presence of a plurality of such elements. The application may be implemented by hardware including several different elements, and by a suitably programmed computer. In the unit claim enumerating several apparatuses, some of these apparatuses may be embodied by the same hardware item. The usage of the words first, second, third, or the like does not indicate any order. These words may be interpreted as names.

The foregoing descriptions are merely specific implementations of the application or descriptions for the specific implementations, but are not intended to limit the protection scope of the application. Any variation or replacement readily figured out by a person skilled in the art within the technical scope disclosed in the application shall fall within the protection scope of the application. The protection scope of the application shall be subject to the protection scope of the claims.

## Claims

1. A vehicle path planning method, comprising:
obtaining an image of a pothole area in front of a vehicle;
obtaining an area division image of the pothole area based on the image of the pothole area, a drivable area being divided in the area division image; and
obtaining, based on the drivable area in the area division image, the shortest path for passing through the pothole area.

2. The vehicle path planning method according to claim 1, further comprising: controlling the vehicle to pass through the pothole area along the shortest path.

3. The vehicle path planning method according to claim 1 or 2, wherein after obtaining the area division image of the pothole area, and before obtaining, based on the drivable area in the area division image, the shortest path for passing through the pothole area, the method further comprises:
preprocessing the area division image to obtain a preprocessed area division image, wherein
the shortest path for passing through the pothole area is obtained based on the drivable area in the preprocessed area division image.

4. The vehicle path planning method according to claim 3, wherein an area in the area division image other than the drivable area is classified as a non-drivable area, and preprocessing the area division image to obtain the preprocessed area division image comprises:
performing an image opening operation on the drivable area in the area division image to reclassify a part of the drivable area as the non-drivable area, to obtain an area division image obtained through the image opening operation, wherein the area division image obtained through the image opening operation is the preprocessed area division image.

5. The vehicle path planning method according to claim 4, wherein preprocessing the area division image to obtain the preprocessed area division image further comprises:
comparing a lateral width of the drivable area in the area division image obtained through the image opening operation with a width of the vehicle, and reclassifying the drivable area whose lateral width is less than a preset multiple of the width of the vehicle as the non-drivable area, to obtain the preprocessed area division image, wherein
the lateral width is a width in a direction perpendicular to a traveling direction of the vehicle.

6. The vehicle path planning method according to claim 5, wherein the preset multiple is 1.2.

7. The vehicle path planning method according to any one of claims 1 to 6, wherein obtaining, based on the drivable area in the area division image, the shortest path for passing through the pothole area comprises:
obtaining, based on the drivable area in the area division image by using an A-Star algorithm, the shortest path for passing through the pothole area.

8. The vehicle path planning method according to any one of claims 2 to 7, wherein controlling the vehicle to pass through the pothole area along the shortest path comprises:
establishing a kinematic model of the vehicle; and
controlling, based on the kinematic model, the vehicle to pass through the pothole area along the shortest path.

9. The vehicle path planning method according to claim 8, wherein establishing the kinematic model of the vehicle comprises:
establishing the kinematic model of the vehicle based on an Ackermann steering geometry theory.

10. The vehicle path planning method according to claim 9, further comprising:
correcting, by using an Ackermann correction rate, the kinematic model established based on the Ackermann steering geometry theory, to obtain a corrected kinematic model, wherein
the corrected kinematic model is configured to control the vehicle to pass through the pothole area along the shortest path.

11. The vehicle path planning method according to any one of claims 8 to 10, wherein controlling, based on the kinematic model, the vehicle to pass through the pothole area along the shortest path comprises:
controlling, based on the kinematic model by using a model predictive control algorithm, the vehicle to pass through the pothole area along the shortest path.

12. A vehicle path planning system, comprising:
a sensor (410), configured to obtain an image of a pothole area in front of a vehicle; and
a controller (420), configured to: obtain an area division image of the pothole area based on the image of the pothole area, wherein a drivable area is divided in the area division image, and obtain, based on the drivable area in the area division image, the shortest path for passing through the pothole area.

13. The vehicle path planning system according to claim 12, wherein the controller is further configured to:
control the vehicle to pass through the pothole area along the shortest path.

14. The vehicle path planning system according to claim 12 or 13, wherein after obtaining the area division image of the pothole area, and before obtaining, based on the drivable area in the area division image, the shortest path for passing through the pothole area, the controller is further configured to:
preprocess the area division image to obtain a preprocessed area division image, wherein
the shortest path for passing through the pothole area is obtained based on the drivable area in the preprocessed area division image.

15. The vehicle path planning system according to claim 14, wherein an area in the area division image other than the drivable area is classified as a non-drivable area, and preprocessing, by the controller, the area division image to obtain the preprocessed area division image comprises:
performing, by the controller, an image opening operation on the drivable area in the area division image to reclassify a part of the drivable area as the non-drivable area, to obtain an area division image obtained through the image opening operation, wherein the area division image obtained through the image opening operation is the preprocessed area division image.

16. The vehicle path planning system according to claim 15, wherein preprocessing, by the controller, the area division image to obtain the preprocessed area division image further comprises:
comparing, by the controller, a lateral width of the drivable area in the area division image obtained through the image opening operation with a width of the vehicle, and reclassifying the drivable area whose lateral width is less than a preset multiple of the width of the vehicle as the non-drivable area, to obtain the preprocessed area division image, wherein
the lateral width is a width in a direction perpendicular to a traveling direction of the vehicle.

17. The vehicle path planning system according to claim 16, wherein the preset multiple is 1.2.

18. The vehicle path planning system according to any one of claims 12 to 17, wherein obtaining, by the controller based on the drivable area in the area division image, the shortest path for passing through the pothole area comprises:
obtaining, by the controller based on the drivable area in the area division image by using an A-Star algorithm, the shortest path for passing through the pothole area.

19. The vehicle path planning system according to any one of claims 13 to 18, wherein controlling, by the controller, the vehicle to pass through the pothole area along the shortest path comprises:
establishing, by the controller, a kinematic model of the vehicle; and
controlling, by the controller based on the kinematic model, the vehicle to pass through the pothole area along the shortest path.

20. The vehicle path planning system according to claim 19, wherein establishing, by the controller, the kinematic model of the vehicle comprises:
establishing, by the controller, the kinematic model of the vehicle based on an Ackermann steering geometry theory.

21. The vehicle path planning system according to claim 20, wherein the controller is further configured to:
correct, by using an Ackermann correction rate, the kinematic model established based on the Ackermann steering geometry theory, to obtain a corrected kinematic model, wherein
the corrected kinematic model is configured to control the vehicle to pass through the pothole area along the shortest path.

22. The vehicle path planning system according to any one of claims 19 to 21, wherein controlling, by the controller based on the kinematic model, the vehicle to pass through the pothole area along the shortest path comprises:
controlling, by the controller based on the kinematic model by using a model predictive control algorithm, the vehicle to pass through the pothole area along the shortest path.

23. An electronic device, comprising a processor and a memory, the memory storing computer instructions, and when the computer instructions are executed by the processor, the processor is enabled to perform the vehicle path planning method according to any one of claims 1 to 11.

24. A vehicle, wherein the vehicle comprises the vehicle path planning system according to any one of claims 12 to 22, or comprises the electronic device according to claim 23.

25. A computer-readable storage medium, wherein the computer-readable storage medium stores computer instructions, and when the computer instructions are executed by a processor, the processor is enabled to perform the vehicle path planning method according to any one of claims 1 to 11.

26. A computer program product, comprising computer instructions, wherein when the computer instructions are executed by a processor, the vehicle path planning method according to any one of claims 1 to 11 is implemented.
